(19) Europäisches Patentamt
European Patent Office
Office européen des brevets

(11) EP 3 998 243 A1

(12) **EUROPEAN PATENT APPLICATION**
published in accordance with Art. 153(4) EPC

(43) Date of publication:
**18.05.2022 Bulletin 2022/20**

(21) Application number: **20860448.8**

(22) Date of filing: **01.09.2020**

(51) International Patent Classification (IPC):
***C03C 17/30*** *(2006.01)* ***B60J 1/18*** *(2006.01)*

(52) Cooperative Patent Classification (CPC):
**B60J 1/18; C03C 17/30**

(86) International application number:
**PCT/JP2020/033025**

(87) International publication number:
**WO 2021/045037 (11.03.2021 Gazette 2021/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **02.09.2019 JP 2019159667**

(71) Applicant: **Central Glass Company, Limited**
**Ube-shi, Yamaguchi 755-0001 (JP)**

(72) Inventors:
- **NAKAI, Nobuyuki**
  **Matsusaka-shi, Mie 515-0001 (JP)**
- **KIDOKORO, Takuro**
  **Matsusaka-shi, Mie 515-0001 (JP)**
- **TETSUMURA, Mizuki**
  **Matsusaka-shi, Mie 515-0001 (JP)**
- **OBARA, Yoshihiko**
  **Matsusaka-shi, Mie 515-0001 (JP)**

(74) Representative: **Mewburn Ellis LLP**
**Aurora Building**
**Counterslip**
**Bristol BS1 6BX (GB)**

# (54) VEHICLE REAR INFORMATION ACQUISITION SYSTEM

(57) The vehicle rear information acquisition system of the disclosure includes: a back window at a rear of a vehicle; and an information acquisition device disposed inside the vehicle, opposing the back window, and configured to apply and/or receive light to acquire information from outside the vehicle, the back window including a glass plate and a coating film on at least a part of a surface of the glass plate, and having a privacy region for protecting privacy inside the vehicle and an information acquisition region opposing the information acquisition device and transmitting the light, the privacy region having the coating film on the surface of the glass plate, the privacy region having a visible light transmittance of 10% or less, the information acquisition region having a visible light transmittance of 25% or more.

FIG.1

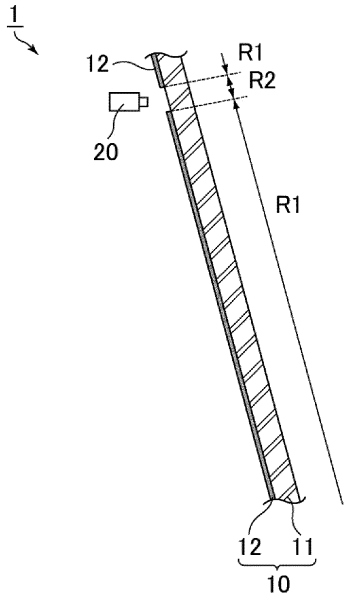


EP 3 998 243 A1

## Description

TECHNICAL FIELD

The disclosure relates to systems for acquiring vehicle rear information.

BACKGROUND ART

Vehicle glass such as a back window at the rear of a vehicle often employs tinted glass such as gray glass in order to protect the privacy inside the vehicle, for example.

Patent Literature 1 discloses as an example of the composition of gray glass a composition containing soda-lime silica glass as a base component and iron oxide or the like as a coloring component.

CITATION LIST

- Patent Literature

Patent Literature 1: JP H6-227839 A

SUMMARY OF INVENTION

- Technical Problem

One of recent increasing trends is that an information acquisition device such as a camera is mounted on the back window of a vehicle to acquire vehicle rear information. When such an information acquisition device is disposed inside a vehicle such that it opposes the back window, gray glass as the back window is to have a relatively pale tinge in order to ensure the visibility of the information acquisition device. Thus, the privacy inside the vehicle and the visibility of the information acquisition device are difficult to achieve at the same time.

The disclosure has been made in order to solve the above issue, and aims to provide a vehicle rear information acquisition system including a back window and an information acquisition device and capable of ensuring the privacy inside the vehicle and the visibility of the information acquisition device.

- Solution to Problem

The vehicle rear information acquisition system of the disclosure includes: a back window at a rear of a vehicle; and an information acquisition device disposed inside the vehicle, opposing the back window, and configured to apply and/or receive light to acquire information from outside the vehicle, the back window including a glass plate and a coating film on at least a part of a surface of the glass plate, and having a privacy region for protecting privacy inside the vehicle and an information acquisition region opposing the information acquisition device and transmitting the light, the privacy region having the coating film on the surface of the glass plate, the privacy region having a visible light transmittance of 10% or less, the information acquisition region having a visible light transmittance of 25% or more.

The vehicle rear information acquisition system of the disclosure utilizes a back window including a glass plate and a coating film on at least a part of a surface of the glass plate. Forming a dark color coating film with a low visible light transmittance on the surface of the glass plate can reduce the visible light transmittance in the region having the coating film. Accordingly, controlling conditions such as the position for forming the coating film and the visible light transmittance of the coating film enables the back window to include a privacy region having a visible light transmittance of as low as 10% or less and an information acquisition region having a visible light transmittance of as high as 25% or more. As a result, both the privacy inside the vehicle and the visibility of the information acquisition device can be ensured.

The visible light transmittance herein means the visible light transmittance measured by the method defined in JIS R 3212:2015.

In the vehicle rear information acquisition system of the disclosure, the glass plate may be made of gray glass having a visible light transmittance of 25% or more and 40% or less. Recognition of information from outside the vehicle via an information acquisition device such as a camera can be sufficiently achieved with images through gray glass. In addition, use of gray glass allows the privacy region to have a visible light transmittance of 10% or less without forming an excessively dark color coating film.

In the vehicle rear information acquisition system of the disclosure, the glass plate may be made of clear glass or green glass having a visible light transmittance of 70% or more and 95% or less. Use of clear glass or green glass can provide clearer images than the case of using gray glass. For example, an image through gray glass may cause

false recognition of colors, such as a case where orange is recognized as red. In contrast, use of an image through clear glass or green glass can prevent such false recognition of colors. Accordingly, use of clear glass or green glass is preferred for variously processing images based on the information from outside the vehicle, not for simply recognizing the information from outside the vehicle.

In the vehicle rear information acquisition system of the disclosure, preferably, the information acquisition region does not have the coating film on the surface of the glass plate. In this case, using a glass plate having a visible light transmittance of 25% or more and forming a dark color coating film only in the privacy region allows the privacy region to have a visible light transmittance of 10% or less and the information acquisition region to have a visible light transmittance of 25% or more.

In the vehicle rear information acquisition system of the disclosure, the coating film may contain at least one of an infrared absorber or an ultraviolet absorber. In this case, the back window can have at least one of an infrared light absorbing function or an ultraviolet light absorbing function.

In the vehicle rear information acquisition system of the disclosure, preferably, the privacy region has an infrared light transmittance of 15% or less, and the information acquisition region has an infrared light transmittance of 25% or more. For example, when an infrared light camera is used as the information acquisition device, the visibility of the infrared light camera can be ensured while the infrared light blocking property is ensured.

The infrared light transmittance herein means an average transmittance in the wavelength range of 780 nm to 2500 nm.

- Advantageous Effects of Invention

The disclosure can ensure both the privacy inside a vehicle and the visibility of an information acquisition device.

BRIEF DESCRIPTION OF DRAWINGS

FIG. 1 is an enlarged schematic cross-sectional view showing an example of the vehicle rear information acquisition system of the disclosure.

FIG. 2 is a schematic front view showing an example of a back window defining the vehicle rear information acquisition system of the disclosure.

FIG. 3 is a schematic front view showing another example of a back window defining the vehicle rear information acquisition system of the disclosure.

DESCRIPTION OF EMBODIMENTS

The vehicle rear information acquisition system of the disclosure is specifically described based on, but not limited to, embodiments below. The embodiments may be appropriately modified as long as the gist of the disclosure is not changed.

The vehicle rear information acquisition system of the disclosure includes a back window at a rear of a vehicle and an information acquisition device disposed inside the vehicle, opposing the back window, and configured to apply and/or receive light to acquire information from outside the vehicle.

FIG. 1 is an enlarged schematic cross-sectional view showing an example of the vehicle rear information acquisition system of the disclosure. FIG. 2 is a schematic front view showing an example of a back window defining the vehicle rear information acquisition system of the disclosure.

A vehicle rear information acquisition system 1 shown in FIG. 1 includes a back window 10 at a rear of a vehicle and an information acquisition device 20 disposed inside the vehicle and opposing the back window 10.

The information acquisition device 20 is a device that applies and/or receives light to acquire information from outside the vehicle, and an example thereof is a photographing device such as a camera that photographs the situation outside the vehicle. The information acquisition device 20 is disposed in the vicinity of the back window 10 and may be fixed to the back window 10 with a mounting member (not shown) if necessary.

The back window 10 includes a glass plate 11 and a coating film 12 on a surface of the glass plate 11. In FIG. 1, the coating film 12 is formed on the surface inside the vehicle of the glass plate 11.

As shown in FIG. 1 and FIG. 2, the back window 10 has a privacy region R1 for protecting the privacy inside the vehicle and an information acquisition region R2 opposing the information acquisition device 20 and transmitting light.

The privacy region R1 has the coating film 12 on the surface of the glass plate 11. Thereby, the privacy region R1 has a visible light transmittance of 10% or less.

In contrast, the information acquisition region R2 has a visible light transmittance of 25% or more. In FIG. 1,

the information acquisition region R2 does not have the coating film 12 on the surface of the glass plate 11.

As shown in FIG. 2, the back window 10 preferably has on its periphery a light blocking layer 13. Additionally, the back window 10 may have hot wires (defogger) 14 and antennas 15.

In the vehicle rear information acquisition system of the disclosure, the privacy region has a coating film on the surface of the glass plate and has a visible light transmittance of 10% or less, and the information acquisition region has a visible light transmittance of 25% or more.

As described above, controlling conditions such as the position for forming the coating film and the visible light transmittance of the coating film enables the back window to include a privacy region having a visible light transmittance of as low as 10% or less and an information acquisition region having a visible light transmittance of as high as 25% or more. As a result, both the privacy inside the vehicle and the visibility of the information acquisition device can be ensured.

In the vehicle rear information acquisition system of the disclosure, the information acquisition region may have a coating film on a surface of the glass plate as long as the information acquisition region has a visible light transmittance of 25% or more. Preferably, the information acquisition region does not have a coating film on a surface of the glass plate. Using a glass plate having a visible light transmittance of 25% or more and forming a dark color coating film only in the privacy region allows the privacy region to have a visible light transmittance of 10% or less and the information acquisition region to have a visible light transmittance of 25% or more.

In the vehicle rear information acquisition system of the disclosure, specifications such as the shape, number, and position of the information acquisition region(s) disposed on the back window are not limited and are appropriately set according to the specifications such as the shape, number, and position of the information acquisition device(s) disposed inside the vehicle.

FIG. 3 is a schematic front view showing another example of a back window defining the vehicle rear information acquisition system of the disclosure.

A back window 10A shown in FIG. 3 has the privacy region R1 for protecting the privacy inside a vehicle, the information acquisition region R2 opposing the information acquisition device 20 and transmitting light, and a light transmitting region R3 transmitting light of an alert light such as a high-mounted stop lamp or a third brake light.

The back window 10A has the information acquisition region R2 at two positions, i.e., on the upper side and the lower side in the height direction. The lower information acquisition region R2 is located at substantially the center in the width direction. The upper information acquisition region R2 is located adjacent to the light transmitting region R3. The light transmitting region R3 is located on the upper side in the height direction and at substantially the center in the width direction.

Preferably, the light transmitting region R3 has a visible light transmittance of 25% or more. In FIG. 3, light transmitting region R3 does not have the coating film 12 on a surface of the glass plate 11. Although not being shown, an alert light such as a high-mounted stop lamp or a third brake light is disposed inside the vehicle such that it opposes the back window 10A.

The back window 10A shown in FIG. 3 has on its periphery the light blocking layer 13. Moreover, the back window 10A have hot wires (defogger) 14, antennas 15, and a wiper 16.

In the vehicle rear information acquisition system of the disclosure, the information acquisition device is not limited as long as it applies and/or receives light in order to acquire information from outside a vehicle. Examples of the information acquisition device include cameras (including visible light cameras, infrared light cameras, and stereo cameras), sensors (including line sensors and rain sensors), laser radars, and optical beacons. The number of information acquisition devices disposed inside a vehicle may be one or two or more. The information acquisition device may be disposed at any position.

Preferably, the vehicle rear information acquisition system of the disclosure further includes an information processing device connected to the information acquisition device. The information processing device is a device that processes the information acquired by the information acquisition device. For example, it is a device that processes photographed images acquired by a photographing device such as a camera.

The way of processing information such as photographed images can be appropriately selected. For example, an object on a photographed image may be recognized by analyzing the photographed image by pattern matching. Also, whether a creature such as a human is present at the rear of the vehicle may be determined based on such object recognition. When a creature is recognized at the rear of the vehicle, an alert may be output by a certain method. Moreover, the photographed image may be given a certain processing, for example. The processed photographed image may be output to a display device such as a display connected to the information processing device.

In the vehicle rear information acquisition system of the disclosure, the back window includes a glass plate typically used for glass of vehicles such as automobiles.

In the vehicle rear information acquisition system of the disclosure, the glass plate may be made of gray glass having a visible light transmittance of 25% or more and 40% or less. Recognition of information from outside the vehicle via an information acquisition device such as a camera can be sufficiently achieved with images through gray glass. In addition, use of gray glass allows the privacy region to have a visible light transmittance of 10% or less without forming

an excessively dark color coating film.

For example, such gray glass has a thickness of 3.1 mm or smaller and contains iron oxide in soda-lime glass. The amount of total iron oxide ($T\text{-}Fe_2O_3$) in terms of $Fe_2O_3$ is 0.9 to 2.2 wt%. The gray glass is colored with at least one of Se, CoO, $Nd_2O_3$, NiO, $MnO_2$, $V_2O_5$, $CeO_2$, $TiO_2$, CuO, $Cr_2O_3$, or SnO.

In the vehicle rear information acquisition system of the disclosure, the glass plate may be made of clear glass or green glass having a visible light transmittance of 70% or more and 95% or less. Use of clear glass or green glass can provide clearer images than the case of using gray glass. For example, an image through gray glass may cause false recognition of colors, such as a case where orange is recognized as red. In contrast, use of an image through clear glass or green glass can prevent such false recognition of colors. Accordingly, use of clear glass or green glass is preferred for variously processing images based on the information from outside the vehicle, not for simply recognizing the information from outside the vehicle.

In the vehicle rear information acquisition system of the disclosure, the coating film defining the back window may contain at least one of an infrared absorber or an ultraviolet absorber. In this case, the back window can have at least one of an infrared light absorbing function or an ultraviolet light absorbing function.

Preferably, in the vehicle rear information acquisition system of the disclosure, the privacy region has an infrared light transmittance of 15% or less, and the information acquisition region has an infrared light transmittance of 25% or more. For example, when an infrared light camera is used as the information acquisition device, the visibility of the infrared light camera can be ensured while the infrared light blocking property is ensured.

In the vehicle rear information acquisition system of the disclosure, the coating film defining the back window can be formed by, for example, applying an application liquid for forming a black coating film which contains a black pigment (such as carbon black, manganese ferrite, or titanium black) to a surface of the glass plate to form a coating film, and then heating the glass plate to cure the coating film.

The application liquid for forming a black coating film may have any composition. The following shows an example of the composition with an amino group-containing silane compound.

A glass plate with a black coating film, which includes a glass plate and a black coating film on at least one surface of the glass plate, is produced by a method having the following features, for example.

The method includes a step of mixing:

(a) a reaction product obtainable by reacting an amino group-containing silane compound represented by $R^1_{4-n}Si(OR^2)_n$ (1) (in the formula (1), $R^1$ represents an amino group-containing organic group, $R^2$ represents a methyl group, an ethyl group, or a propyl group, and n represents an integer selected from 1 to 3) and
at least one boron compound selected from the group consisting of $H_3BO_3$ and $B_2O_3$;
(b) a metal alkoxide and/or a condensate of a metal alkoxide;
(c) a synthetic resin;
(d) a solvent including a non-aqueous solvent having an SP value of substantially 8 to 11.5 $(cal/cm^3)^{1/2}$; and
(e) an black pigment, to provide an application liquid for forming a black coating film,

a step of applying the application liquid for forming a black coating film to a surface of the glass plate to form a coating film, and
a step of heating the glass plate after the application step to cure the coating film and thereby forming a black coating film,
the application liquid for forming a black coating film containing 0.5 to 7.0 mass% of the black pigment relative to the total solid content.

The term "total solid content" means the total amount of all the components forming the black coating film, and this amount can be determined by subtracting the amount of organic groups eliminated from the respective components through hydrolysis, polycondensation reaction, or the like, from the amount of solvent-removed application liquid for forming a black coating film. The viscosity of the application liquid for forming a black coating film is influenced by the amount of the total solid content in the application liquid for forming a black coating film and thus can be set in consideration of the application efficiency of the application liquid for forming a black coating film to the glass plate. For example, the total solid content can be set to 5 mass% to 40 mass%, preferably 10 mass% to 35 mass%.

The application liquid for forming a black coating film may have a composition containing 3-glycidoxypropyltrimethoxysilane (GPTMS) and tetraethoxysilane (TEOS). In this case, the application liquid for forming a black coating film can be prepared by adding the component (e) and water to GPTMS and TEOS.

1. Component (a)

When an amino group-containing silane compound represented by $R^1_{4-n}Si(OR^2)_n$ (1) (in the formula (1), $R^1$

represents an amino group-containing organic group, $R^2$ represents a methyl group, an ethyl group, or a propyl group, and n represents an integer selected from 1 to 3) and

at least one boron compound selected from the group consisting of $H_3BO_3$ and $B_2O_3$ are mixed, these components are reacted to provide transparent, viscous liquid in several to several tens of minutes, and the liquid is then solidified. Specifically, the boron compound functions as a crosslinker via the amino group in the amino group-containing silane compound to polymerize these components. As a result, the mixture presumably turns into viscous liquid and is then solidified. The amino group-containing silane compound itself is liquid. In the reaction between the amino group-containing silane compound and the boron compound, water is preferably not used.

In the amino group-containing silane compound, $R^1$ represents an amino group-containing organic group. Examples thereof include, but are not limited to, monoaminomethyl, diaminomethyl, triaminomethyl, monoaminoethyl, diaminoethyl, triaminoethyl, tetraaminoethyl, monoaminopropyl, diaminopropyl, triaminopropyl, tetraaminopropyl, monoaminobutyl, diaminobutyl, triaminobutyl, and tetraaminobutyl groups and an organic group that contains an alkyl or aryl group having a greater carbon number than these. Particularly preferred is a γ-aminopropyl or aminoethyl aminopropyl group, and most preferred is a γ-aminopropyl group.

$R^2$ represents a methyl group, an ethyl group, or a propyl group. Preferred among these is a methyl group or an ethyl group. The symbol n represents an integer selected from 1 to 3. Preferred among these is an integer selected from 2 and 3, particularly preferred is 3. Specifically, the amino group-containing silane compound is particularly preferably γ-aminopropyltriethoxysilane or N-β-(aminoethyl)-γ-aminopropyltrimethoxysilane.

The boron compound is at least one boron compound selected from the group consisting of $H_3BO_3$ and $B_2O_3$. Particularly preferred is $H_3BO_3$.

In consideration of the reaction rate, the amino group-containing silane compound and the boron compound may be used at one of the following ratios. That is, the boron compound is preferably used at a proportion of 0.02 mol to 8 mol, more preferably 0.02 mol to 5 mol, still more preferably 0.2 mol to 5 mol, relative to 1 mol of the amino group-containing silane compound.

The amino group-containing silane compound and the boron compound can be mixed under any appropriately selected mixing conditions (including the temperature, time for mixing, and mixing method). Under a normal room temperature condition, the mixture turns into transparent, viscous liquid in several to several tens of minutes and is then solidified. Time for solidification and the viscosity and rigidity of the resulting reaction product will vary depending on the proportion of the boron compound. The mixture is better to be viscous liquid than solid for easily serving as a component stably dissolved in the application liquid. Preferably, the reaction product is a reaction product obtainable by reacting the amino group-containing silane compound and the boron compound without undergoing a step of adding water to cause hydrolysis.

The reaction product can be obtained in an amount of 40 mass% to 80 mass% relative to the total solid content. Less than 40 mass% of the reaction product may reduce the hardness of the resulting black coating film. In contrast, more than 80 mass% of the reaction product may cause the resulting black coating film to have cracks during a weather resistance test. In consideration of these, the amount of the reaction product may be 50 mass% to 70 mass% relative to the total solid content.

2. Component (b)

To the reaction product is added a metal alkoxide and/or a condensate of a metal alkoxide as the component (b). Specifically, the component (b) is added at the time of or after the reaction between the amino group-containing silane compound and the boron compound. Addition of the component (b) can improve the hardness of the resulting black coating film and allows the resulting mixture to be viscous liquid similar to that in the case without using the component (b), whereby the mixture can serve as a component stably dissolved in the application liquid.

Examples of the metal of the metal alkoxide as the component (b) include, but are not limited to, Si, Ta, Nb, Ti, Zr, Al, Ge, B, Na, Ga, Ce, V, Ta, P, and Sb. Preferred are Si, Ti, and Zr. Since the component (b) is preferably liquid, particularly preferred are Si and Ti. Examples of the alkoxide (alkoxy group) of the metal alkoxide as the component (b) include a methoxy group, an ethoxy group, a propoxy group, a butoxy group, and an alkoxy group having a greater carbon number than these. Preferred among these are a methoxy group, an ethoxy group, a propoxy group, and a butoxy group, more preferred are a methoxy group and an ethoxy group. Particularly preferred for the component (b) are tetramethoxysilane and tetraethoxysilane.

Specific examples of the metal alkoxide as the component (b) include tetramethoxysilane, tetraethoxysilane, tetrapropoxysilane, tetrabutoxysilane, methyltrimethoxysilane, ethyltriethoxysilane, propyltripropoxysilane, butyltributoxysilane, tetramethoxytitanium, tetraethoxytitanium, tetrapropoxytitanium, tetrabutoxytitanium, methyltrimethoxytitanium, ethyltriethoxytitanium, propyltripropoxytitanium, butyltributoxytitanium, tetramethoxyzirconium, tetraethoxyzirconium, tetrapropoxyzirconium, tetrabutoxyzirconium, methyltrimethoxyzirconium, ethyltriethoxyzirconium, propyltripropoxyzirconium, and butyltributoxyzirconium. Preferred among these are tetraethoxysilane, tetramethoxysilane, ethyltriethoxysilane, and methyltrimethoxysilane.

The amount of the metal alkoxide used as the component (b) is preferably at a proportion of 10 mol or less, more preferably 0.1 mol to 5 mol, relative to 1 mol of the amino group-containing silane compound. Less than 0.1 mol of the component (b) relative to 1 mol of the amino group-containing silane compound and the boron compound may have difficulty in achieving the described effect of adding the component (b), while more than 5 mol of the component (b) may cause white turbidity.

An example of the condensate of a metal alkoxide as the component (b) is a condensate of a metal alkoxide represented by at least one formula selected from the group consisting of the following formulas (b1) and (b2).

[Chem. 1]

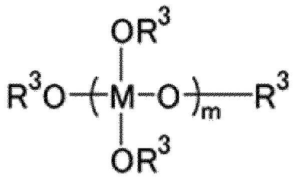

(b1)

[Chem. 2]

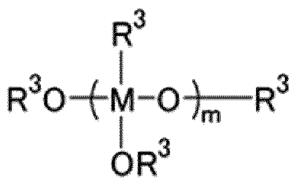

(b2)

In each formula, $R^3$s each represent an alkyl group part of which may be hydrogen; $R^3$s may be independently the same as or different from each other; m represents an integer selected from 2 to 20; and M represents at least one metal selected from the group consisting of Si, Ti, and Zr.

The condensate of a metal alkoxide as the component (b) is added in an amount of preferably 2 to 50 mol, more preferably 4 mol or more, in terms of the mass of the metal alkoxide monomer and relative to 1 mol of the amino group-containing silane compound. Specifically, too large an amount of the component (b) tends to reduce the hardness of the resulting coating film, while too small an amount thereof reduces the amount of the metal element contained, possibly reducing the hardness of the resulting coating film or causing an issue of chemical durability for some applications. Too large an amount of the component (b) also tends to prolong the time for curing in providing a black coating film.

In the condensate of a metal alkoxide as the component (b), $R^3$s each represent an alkyl group part of which may be hydrogen, and $R^3$s may be independently the same as or different from each other. Preferably, $R^3$s are each a methyl group, an ethyl group, a propyl group, a butyl group, or an alkyl group having a greater carbon number than these, more preferably a methyl group or an ethyl group. In the condensate of a metal alkoxide as the component (b), m represents an integer selected from 2 to 20, preferably 3 to 10, most preferably 5. In the condensate of a metal alkoxide as the component (b), M represents at least one metal selected from the group consisting of Si, Ti, and Zr, preferably Si or Ti, most preferably Si.

Examples of a metal alkoxide monomer unit forming the condensate of a metal alkoxide as the component (b) include tetramethoxysilane, tetraethoxysilane, tetrapropoxysilane, tetrabutoxysilane, methyltrimethoxysilane, ethyltriethoxysilane, propyltripropoxysilane, butyltributoxysilane, tetramethoxytitanium, tetraethoxytitanium, tetrapropoxytitanium, tetrabutoxytitanium, methyltrimethoxytitanium, ethyltriethoxytitanium, propyltripropoxytitanium, butyltributoxytitanium, tetramethoxyzirconium, tetraethoxyzirconium, tetrapropoxyzirconium, tetrabutoxyzirconium, methyltrimethoxyzirconium, ethyltriethoxyzirconium, propyltripropoxyzirconium, and butyltributoxyzirconium.

The component (b), when represented by the formula (b1), is preferably a condensate (pentamer) of tetraethoxysilane or a condensate (pentamer) of tetramethoxysilane. The component (b), when represented by the formula (b2), is preferably a condensate (pentamer) of ethyltriethoxysilane or a condensate (pentamer) of methyltrimethoxysilane.

As described above, to the reaction product is added a metal alkoxide (monomer) and/or a condensate of a metal alkoxide as the component (b). Since the metal alkoxide monomer has a lower viscosity than the condensate thereof, further addition of the metal alkoxide monomer may improve the application property of the resulting application liquid. However, the metal alkoxide monomer in a large amount, such as in an amount equal to or more than the amount of the condensate thereof, tends to reduce the viscosity of the application liquid and may tend to cause dripping during

application.

3. Component (c)

To the reaction product is added a synthetic resin as the component (c). Specifically, a synthetic resin is added as the component (c) at the time of or after the reaction between the amino group-containing silane compound and the boron compound. Addition of the component (c) allows the resulting black coating film to prevent cracks.

Examples of the synthetic resin as the component (c) include, but are not limited to, thermosetting resins, thermoplastic resins, and ultraviolet-curable resins. Specific examples include acrylic resins, epoxy resins, polyester resins, amino resins, urethane resins, furan resins, silicone resins, and modified products of any of these resins. The synthetic resin may have a polymerization degree (molecular weight) selected from a wide range. Preferred among these are an epoxy resin, dipentaerythritol hexaacrylate, epoxy acrylate, a silicone resin, a vinyl ester resin, polyvinyl butyral, and polyvinyl alcohol. The synthetic resin is preferably in the form of liquid.

The component (c) is used at a proportion of preferably 5 to 30 mass%, more preferably 10 to 20 mass%, relative to the total solid content. Less than 5 mass% of the component (c) may have difficulty in achieving the described effect of adding the component (c). More than 30 mass% of the component (c) may need addition of a resin curing agent and may fail to give high hardness to the resulting coating film.

4. Component (d)

The component (d) serves as a solvent of the application liquid for forming a black coating film and includes a non-aqueous solvent having an SP value of substantially 8 to 11.5 $(cal/cm^3)^{1/2}$. The phrase "non-aqueous solvent having an SP value of substantially 8 to 11.5 $(cal/cm^3)^{1/2}$" means any of "single non-aqueous solvent having an SP value of 8 to 11.5 $(cal/cm^3)^{1/2}$", "combination of non-aqueous solvents each having an SP value of 8 to 11.5 $(cal/cm^3)^{1/2}$, the mixed solvent having an SP value within the range of 8 to 11.5 $(cal/cm^3)^{1/2}$", and "combination of a non-aqueous solvent having an SP value of 8 to 11.5 $(cal/cm^3)^{1/2}$ and a solvent having an SP value not within the range, the mixed solvent having an SP value within the range of 8 to 11.5 $(cal/cm^3)^{1/2}$". In the case where two solvents "solvent A" and "solvent B" are used, for example, the SP value of the mixed solvent can be calculated according to the following equation.

[Math. 1]

$$\begin{aligned}\text{SP value of mixed solvent} &= \text{SP value of solvent A} \times \frac{\text{Number of moles of solvent A}}{(\text{Number of moles of solvent A} + \text{Number of moles of solvent B})} \\ &+ \text{SP value of solvent B} \times \frac{\text{Number of moles of solvent B}}{(\text{Number of moles of solvent A} + \text{Number of moles of solvent B})}\end{aligned}$$

The SP value is a commonly known solubility parameter and is an index of solubility or miscibility. The SP value is known to be calculated by a method such as a method including calculation from evaporation heat of the liquid, the Hansen's method and the Hoy's method each including calculation based on the molecular structure, the Small's method, and the Fedor's estimation method. Used herein is the Fedor's estimation method using calculation from the molecular structure, disclosed in R. F. Fedors: Polym. Eng. Sci., 14(2), 147-154 (1974), for example. The SP values used herein are values determined at 25°C.

Examples of the non-aqueous solvent having an SP value of 8 to 11.5 $(cal/cm^3)^{1/2}$ include aromatic hydrocarbons such as toluene (SP value: 9.1 $(cal/cm^3)^{1/2}$) and xylene (SP value: 9.1 $(cal/cm^3)^{1/2}$); acetate esters such as ethyl acetate (SP value: 8.8 $(cal/cm^3)^{1/2}$) and butyl acetate (SP value: 8.7 $(cal/cm^3)^{1/2}$); ketones such as acetone (SP value: 9.1 $(cal/cm^3)^{1/2}$) methyl ethyl ketone (SP value: 9.0 $(cal/cm^3)^{1/2}$), methyl isobutyl ketone (SP value: 8.3 $(cal/cm^3)^{1/2}$), cyclohexanone (SP value: 9.8 $(cal/cm^3)^{1/2}$), and 2-heptanone (SP value: 8.5 $(cal/cm^3)^{1/2}$); glycol ethers such as 3-methoxy-3-methylbutanol (SP value: 10.5 $(cal/cm^3)^{1/2}$), 1-methoxy-2-propanol (SP value: 11.3 $(cal/cm^3)^{1/2}$), 1-ethoxy-2-propanol (SP value: 10.9 $(cal/cm^3)^{1/2}$), 3-methoxybutyl acetate (SP value: 8.8 $(cal/cm^3)^{1/2}$), and diethylene glycol monobutyl ether (SP value: 10.5 $(cal/cm^3)^{1/2}$); ethers such as THF (SP value: 8.3 $(cal/cm^3)^{1/2}$); cellosolves such as ethylene glycol monoethyl ether (SP value: 11.5 $(cal/cm^3)^{1/2}$), ethylene glycol mononormal butyl ether (SP value: 10.8 $(cal/cm^3)^{1/2}$), and 2-methoxybutyl acetate (SP value: 9.0 $(cal/cm^3)^{1/2}$); chlorohydrocarbons such as dichloromethane (SP value: 10.2

(cal/cm$^3$)$^{1/2}$); and other non-aqueous solvents such as N,N-dimethyl formamide (SP value: 10.2 (cal/cm$^3$)$^{1/2}$). Preferred among these are ketones such as methyl ethyl ketone (SP value: 9.0 (cal/cm$^3$)$^{1/2}$), methyl isobutyl ketone (SP value: 8.3 (cal/cm$^3$)$^{1/2}$), cyclohexanone (SP value: 9.8 (cal/cm$^3$)$^{1/2}$), and 2-heptanone (SP value: 8.5 (cal/cm$^3$)$^{1/2}$) and glycol ethers such as 3-methoxy-3-methylbutanol (SP value: 10.5 (cal/cm$^3$)$^{1/2}$), 1-methoxy-2-propanol (SP value: 11.3 (cal/cm$^3$)$^{1/2}$), and 1-ethoxy-2-propanol (SP value: 10.9 (cal/cm$^3$)$^{1/2}$).

Examples of the solvent having an SP value not within the range of 8 to 11.5 (cal/cm$^3$)$^{1/2}$, which is optionally contained in an application liquid, include n-hexane (SP value: 7.3 (cal/cm$^3$)$^{1/2}$), diethyl ether (SP value: 7.3 (cal/cm$^3$)$^{1/2}$), 2-methoxyethanol (SP value: 12.0 (cal/cm$^3$)$^{1/2}$), and carbon tetrachloride (SP value: 12.2 (cal/cm$^3$)$^{1/2}$).

5. Component (e)

Examples of the black pigment as the component (e) include Pigment Black 26, carbon black, and titanium black. The black pigment has an average particle diameter $D_{50}$ of preferably 10 to 300 nm. The black pigment having an average particle diameter $D_{50}$ of smaller than 10 nm tends to cause its particles to aggregate. The black pigment having an average particle diameter $D_{50}$ of greater than 300 nm tends to have a reduced visible light transmittance. In consideration of these, the black pigment has an average particle diameter $D_{50}$ of more preferably 15 to 280 nm, still more preferably 20 to 250 nm.

The black pigment is contained in an amount of preferably 0.5 to 7.0 mass% relative to the total solid content of the application liquid for forming a black coating film. Less than 0.5 mass% of the black pigment tends to reduce privacy protection, while more than 7.0 mass% of the black pigment tends to increase the haze. In consideration of these, the black pigment is contained in an amount of more preferably 0.6 to 6.5 mass%, still more preferably 0.7 to 6.0 mass%, relative to the total solid content of the application liquid for forming a black coating film.

6. Other components

The application liquid for forming a black coating film may contain fine particles of a conductive substance. The presence of fine particles of a conductive substance allows the glass plate with a black coating film to have an infrared light blocking property. Examples of the conductive substance include indium tin oxide (ITO) and antimony tin oxide (ATO). Fine particles of a conductive substance are contained in an amount of preferably 5 to 15 mass% relative to the total solid content and have an average particle diameter $D_{50}$ of preferably 50 to 100 nm.

In addition to the above components, the application liquid for forming a black coating film may contain additives according to intended use, such as ultraviolet absorbers, coloring pigments, mildew-proofing agents, photocatalyst materials, antirusts, anticorrosives, anti-algae agents, water repellents, oil repellents, light stabilizers, antioxidants, substrate wetting agents, hydrophilic materials, and water-absorbent materials.

The application liquid for forming a black coating film may be applied to the surface of the glass plate by a known application technique such as spin coating, dip coating, nozzle coating, curtain coating, roll coating, spray coating, blade coating, and brush coating. Preferred among these is spray coating because it is applicable to glass having any shape and can form a coating film with a small amount of the application liquid.

Preferably, the black coating film is not formed on the surface of the glass plate in the region used as the information acquisition region. For example, the application liquid may be tentatively applied to the entire surface of the substrate (glass plate). Then, the application liquid may be wiped out in the region with no coating film thereon; the region for not forming the coating film may be immersed in a solvent, whereby the application liquid applied to the region is removed; a solvent may be poured over the region for not forming the coating film, whereby the application liquid applied to the region is removed; or the region for not forming the coating film may be tentatively masked and the masking may be removed after the application. Examples of the masking include masking tape and metal masking.

Alternatively, in the region for not forming the coating film may be tentatively formed a water-repellent film or water- and oil-repellent film that repels the application liquid (that is incompatible with the application liquid), followed by application. Then, the application liquid having been repelled and remaining on the water-repellent film or water- and oil-repellent film may be wiped out. Furthermore, the water-repellent film or water- and oil-repellent film may be removed.

Alternatively, in the region for not forming the coating film may be tentatively formed a water repellent film or water- and oil-repellent film that repels the application liquid (that is incompatible with the application liquid), followed by application and curing. Then, the cured coating film having been repelled and remaining on the water repellent film or water-and oil-repellent film may be removed. Furthermore, the water repellent film or water- and oil-repellent film may be removed.

Alternatively, application may be performed on the entire surface of the substrate (glass plate), followed by curing, to form a coating film on the entire surface of the substrate (glass plate). Then, the coating film in a desired region may be physically or chemically removed.

In the vehicle rear information acquisition system of the disclosure, the coating film defining the back window

has a thickness of preferably 1 μm to 8.5 μm. The coating film having a thickness of smaller than 1 μm or greater than 8.5 μm tends to have poor durability.

The thickness of the coating film can be measured with a surface roughness tester (e.g., Surfcorder ET4000A available from Kosaka Laboratory, Ltd.).

The vehicle rear information acquisition system of the disclosure is not limited to the embodiments described herein. Various applications and modifications can be made to the structure and production method of the glass plate, the structure and forming method of the coating film, the structure of the information acquisition device, and the like, without departing from the spirit or scope of the disclosure.

This application claims priority to Japanese Patent Application No. 2019-159667 filed on September 2, 2019 under the Paris Convention or the law of the designated country. The entire contents of the application are incorporated by reference herein in their entirety.

REFERENCE SIGNS LIST

| | |
|---|---|
| 1 | vehicle rear information acquisition system |
| 10, 10A | back window |
| 11 | glass plate |
| 12 | coating film |
| 13 | light blocking layer |
| 14 | hot wire |
| 15 | antenna |
| 16 | wiper |
| 20 | information acquisition device |
| R1 | privacy region |
| R2 | information acquisition region |
| R3 | light transmitting region |

## Claims

**1.** A vehicle rear information acquisition system comprising:

a back window at a rear of a vehicle; and
an information acquisition device disposed inside the vehicle, opposing the back window, and configured to apply and/or receive light to acquire information from outside the vehicle,
the back window including a glass plate and a coating film on at least a part of a surface of the glass plate, and having a privacy region for protecting privacy inside the vehicle and an information acquisition region opposing the information acquisition device and transmitting the light,
the privacy region having the coating film on the surface of the glass plate,
the privacy region having a visible light transmittance of 10% or less,
the information acquisition region having a visible light transmittance of 25% or more.

**2.** The vehicle rear information acquisition system according to claim 1,
wherein the glass plate is made of gray glass having a visible light transmittance of 25% or more and 40% or less.

**3.** The vehicle rear information acquisition system according to claim 1,
wherein the glass plate is made of clear glass or green glass having a visible light transmittance of 70% or more and 95% or less.

**4.** The vehicle rear information acquisition system according to any one of claims 1 to 3,
wherein the information acquisition region does not have the coating film on the surface of the glass plate.

**5.** The vehicle rear information acquisition system according to any one of claims 1 to 4,
wherein the coating film contains at least one of an infrared absorber or an ultraviolet absorber.

**6.** The vehicle rear information acquisition system according to any one of claims 1 to 5,

wherein the privacy region has an infrared light transmittance of 15% or less, and the information acquisition region has an infrared light transmittance of 25% or more.

FIG.1

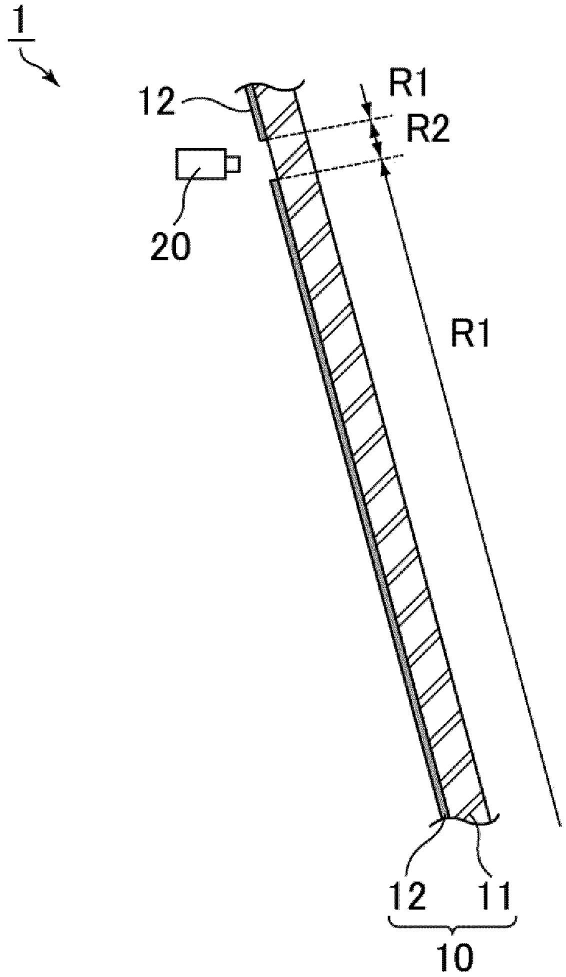


FIG.2

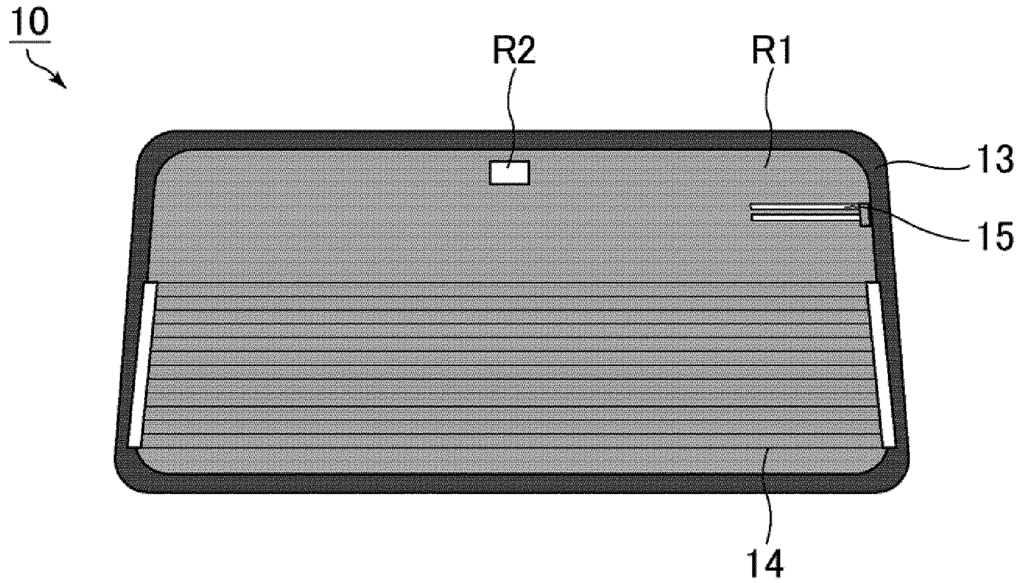

FIG.3

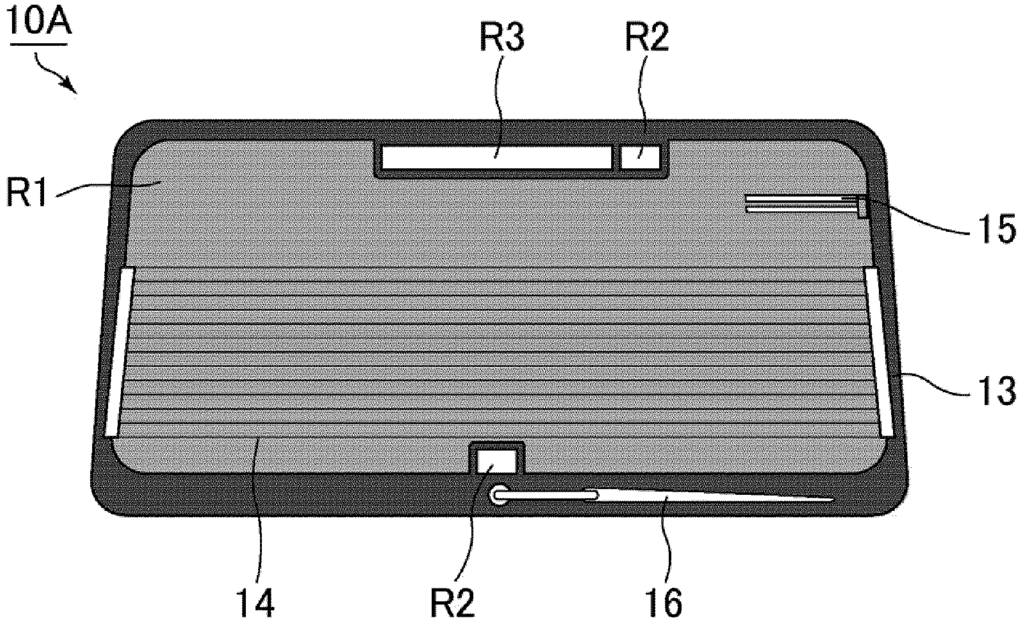

**INTERNATIONAL SEARCH REPORT**

International application No. PCT/JP2020/033025

A. CLASSIFICATION OF SUBJECT MATTER
C03C 17/30(2006.01)i; B60J 1/18(2006.01)i
FI: C03C17/30 A; B60J1/18 Z

According to International Patent Classification (IPC) or to both national classification and IPC

B. FIELDS SEARCHED
Minimum documentation searched (classification system followed by classification symbols)
C03C17/30; B60J1/18

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 10-212137 A (NIPPON SHEET GLASS CO., LTD.) 11 August 1998 (1998-08-11) paragraphs [0001]-[0014], [0033]-[0052], [0054]-[0059], fig. 1-7 | 1-6 |
| Y | JP 9-320000 A (NIPPON SEIKI CO., LTD.) 12 December 1997 (1997-12-12) claims 1-4, paragraphs [0001], [0012]-[0017], fig. 1-2 | 1-6 |
| Y | WO 2018/123916 A1 (NIPPON SHEET GLASS CO., LTD.) 05 July 2018 (2018-07-05) paragraphs [0058]-[0060], [0212], fig. 1-2 | 1-6 |
| Y | JP 2006-327381 A (ASAHI GLASS CO., LTD.) 07 December 2006 (2006-12-07) claims 1, 7, 9, paragraphs [0003]-[0004], [0025], [0028]-[0031], [0060], fig. 1-7 | 1-6 |
| Y | JP 6-247740 A (CENTRAL GLASS CO., LTD.) 06 September 1994 (1994-09-06) paragraphs [0010], [0017], [0034], tables 1-2 | 2 |

☒ Further documents are listed in the continuation of Box C. ☒ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 16 November 2020 (16.11.2020) | 24 November 2020 (24.11.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | Telephone No. |

Form PCT/ISA/210 (second sheet) (January 2015)

**INTERNATIONAL SEARCH REPORT**

International application No.
PCT/JP2020/033025

C (Continuation). DOCUMENTS CONSIDERED TO BE RELEVANT

| Category* | Citation of document, with indication, where appropriate, of the relevant passages | Relevant to claim No. |
|---|---|---|
| Y | JP 9-124341 A (GLAVERBEL) 13 May 1997 (1997-05-13) claims 1, 8-9, tables 2-4 | 2 |
| Y | JP 6-40252 A (ASAHI GLASS CO., LTD.) 15 February 1994 (1994-02-15) claim 1, paragraph [0018] | 5 |
| A | JP 2002-3782 A (CENTRAL GLASS CO., LTD.) 09 January 2002 (2002-01-09) entire text | 1-6 |
| A | JP 11-302037 A (CENTRAL GLASS CO., LTD.) 02 November 1999 (1999-11-02) entire text | 1-6 |
| A | WO 2018/025932 A1 (SEKISUI CHEMICAL CO., LTD.) 08 February 2018 (2018-02-08) entire text | 1-6 |

Form PCT/ISA/210 (continuation of second sheet) (January 2015)

**INTERNATIONAL SEARCH REPORT**
Information on patent family members

International application No.
PCT/JP2020/033025

| Patent Documents referred in the Report | Publication Date | Patent Family | Publication Date |
|---|---|---|---|
| JP 10-212137 A | 11 Aug. 1998 | US 6075490 A<br>column 1, line 5 to column 3, line 28, column 7, line 18 to column 10, line 48, column 10, line 55 to column 11, line 44, fig. 1-7<br>US 6231924 B1<br>WO 1998/023548 A1<br>EP 0955276 A1 | |
| JP 9-320000 A | 12 Dec. 1997 | (Family: none) | |
| WO 2018/123916 A1 | 05 Jul. 2018 | US 2020/0023618 A1<br>paragraphs [0081]-[0083], [0272]<br>EP 3564030 A1<br>CN 110099792 A | |
| JP 2006-327381 A | 07 Dec. 2006 | (Family: none) | |
| JP 6-247740 A | 06 Sep. 1994 | (Family: none) | |
| JP 9-124341 A | 13 May 1997 | US 5877103 A<br>claims 1, 10-11, tables 2-3 | |
| JP 6-40252 A | 15 Feb. 1994 | US 5641558 A<br>claim 1, column 4, lines 19-38 | |
| JP 2002-3782 A | 09 Jan. 2002 | (Family: none) | |
| JP 11-302037 A | 02 Nov. 1999 | (Family: none) | |
| WO 2018/025932 A1 | 08 Feb. 2018 | US 2019/0291389 A1<br>entire text<br>EP 3495332 A1<br>CN 109219585 A<br>KR 10-2019-0038476 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H6227839 A
- JP 2019159667 A


### Non-patent literature cited in the description


- **R. F. FEDORS.** *Polym. Eng. Sci.,* 1974, vol. 14 (2), 147-154